# EUROPÄISCHE PATENTSCHRIFT

(11) **EP 1 927 754 B1**
(45) Veröffentlichungstag und Bekanntmachung des Hinweises auf die Patenterteilung: **20.02.2019**
(21) Anmeldenummer: 07117875.0
(22) Anmeldetag: 04.10.2007
(51) Int. Cl.: F04C 14/16, F04C 14/06, F01M 1/16

(54) **Innenzahnradpumpe**
Inner geared pump
Pompe à engrenages intérieurs

(30) Priorität: 01.12.2006 DE 102006056844
(43) Veröffentlichungstag der Anmeldung: 04.06.2008
(73) Patentinhaber: ROBERT BOSCH GMBH, 70442 Stuttgart (DE)
(72) Erfinder: Siegel, Heinz, 70435, Stuttgart (DE)

(56) Entgegenhaltungen:
- WO-A1-2006/033207
- DE-A1- 19 531 359
- DE-A1- 19 935 781
- US-A- 4 502 845
- US-A- 5 797 732

## Beschreibung

### Stand der Technik

Aus der Veröffentlichung "Ölpumpen für Verbrennungsmotoren", Pierburg AG, Alfred-Pierburg-Straße 1, D-41460 Neuss, sind stufengeregelte Ölpumpen bekannt. Moderne Verbrennungskraftmaschinen benötigen im unteren Drehzahlspektrum durch ölhydraulische Aufgaben, so z. B. zum hydraulischen Ventilspielausgleich, zur Kolbenkühlung, zur Nockenwellenverstellung usw., sowie aufgrund von Drehzahlabsenkungen im Leerlauf größere Ölvolumenströme, welche bei ungeregelten Pumpen im hohen Drehzahlbereich zu erheblichen Verlustleistungen führen. So kommen stufengeregelte Ölpumpen zum Einsatz. Stufengeregelte Ölpumpen basieren auf der Zu- beziehungsweise Abschaltung mindestens einer zusätzlichen Pumpenstufe auf der Druckseite mittels eines druckgesteuerten Ventils. Bei niedriger Drehzahl der Verbrennungskraftmaschine können beide Ausgänge der stufengeregelten Ölpumpe geöffnet werden, bei hoher Drehzahl wird eine zweite Pumpe mit der Saugseite der ersten Pumpe kurzgeschlossen. Dadurch lässt sich eine sehr gute Anpassung der Fördermenge an den Bedarf der Verbrennungskraftmaschine erzielen und die Leistungsaufnahme der Pumpe herabsetzen. Die stufengeregelten Ölpumpen können sowohl als innenverzahnte als auch als außenverzahnte Ölpumpen ausgelegt werden. Bei den stufengeregelten Ölpumpen, die aus der oben genannten Veröffentlichung "Ölpumpen für Verbrennungskraftmotoren" der Firma Pierburg AG bekannt sind, ist eine Ausführungsform einer stufengeregelten Ölpumpe dargestellt, die drei nebeneinander liegend angeordnete außenverzahnte Zahnräder umfasst. Dadurch baut diese Pumpe recht breit.

Die WO 2006/033207 A1 offenbart eine hydraulische Schaltung mit einem Förderaggregat.

Die Offenlegungsschrift DE 199 35 781 A1 offenbart einen Hydraulikkreislauf mit einer ersten und einer zweiten Pumpe, einem ersten Förderkanal, der von der ersten Pumpe gefördertes Hydraulikfluid enthält und mit einer Bohrung in Verbindung steht, einem zweiten Förderkanal, der von der zweiten Pumpe gefördertes Hydraulikfluid enthält und mit einer Betätigungseinrichtung in Verbindung steht, einem Verbindungskanal, der die Verbindung zwischen dem ersten und dem zweiten Förderkanal sicherstellt, sowie ein in dem Verbindungskanal angeordnetes Entlastungsventil, das bei einem vorbestimmten Druck für den zweiten Förderkanal zu öffnen ist.

### Offenbarung der Erfindung

Erfindungsgemäß wird eine hydraulische Schaltung mit einem Förderaggregat zur Förderung eines Hydraulikfluides, insbesondere zur Betätigung von Stellgliedern und/oder zur Begrenzung von Volumenströmen, vorgeschlagen, mit einem Gehäuse, wobei das Förderaggregat einen ersten und einen zweiten Druckkanal aufweist, und wobei die hydraulische Schaltung eine erste Druckleitung und eine zweite Druckleitung aufweist und wobei der erste Druckkanal in die erste Druckleitung und der zweite Druckkanal in die zweite Druckleitung mündet, und wobei die hydraulische Schaltung ein Rückschlagventil aufweist durch das die erste Druckleitung von der zweiten Druckleitung getrennt ist und wobei einer der Druckkanäle bei Betätigung eines Schaltventils mit der Saugseite verbunden wird. Ferner ist erfindungsgemäß vorgesehen, dass in dem Gehäuse lediglich ein Zahnradpaar aufgenommen ist, also ein Innenzahnrad und ein Außenzahnrad aufgenommen sind, die mindestens einen Förderraum begrenzen, der über einen Saugkanal mit einem Hydraulikfluid beaufschlagt ist, wobei am Förderaggregat druckseitig der erste Druckkanal und zweite Druckkanal vorgesehen sind und dass es sich bei der Länge des zweiten Druckkanales um eine Länge in Umfangsrichtung handelt, die die Länge des ersten Druckkanals in Umfangsrichtung übersteigt.

### Kurze Beschreibung der Zeichnungen

Anhand der Zeichnung wird die Erfindung nachstehend eingehender beschrieben. Es zeigt:
- Figur 1: die schematische Ansicht einer Innenzahnradpumpe,
- Figur 2: ein exzentrisch zum Hohlrad gelagertes Ritzel einer Innenzahnradpumpe mit den sich ergebenden Förderräumen,
- Figur 3: ein erstes hydraulisches Verschaltungsschema des erfindungsgemäß vorgeschlagenen Förderaggregates, als Innenzahnradpumpe ausgeführt mit einem hydraulischen Schaltventil und
- Figur 4: eine weitere Ausführungsform des erfindungsgemäß vorgeschlagenen, als Innenzahnradpumpe ausgebildeten Förderaggregates, mit einem Magnetventil.

### Ausführungsformen

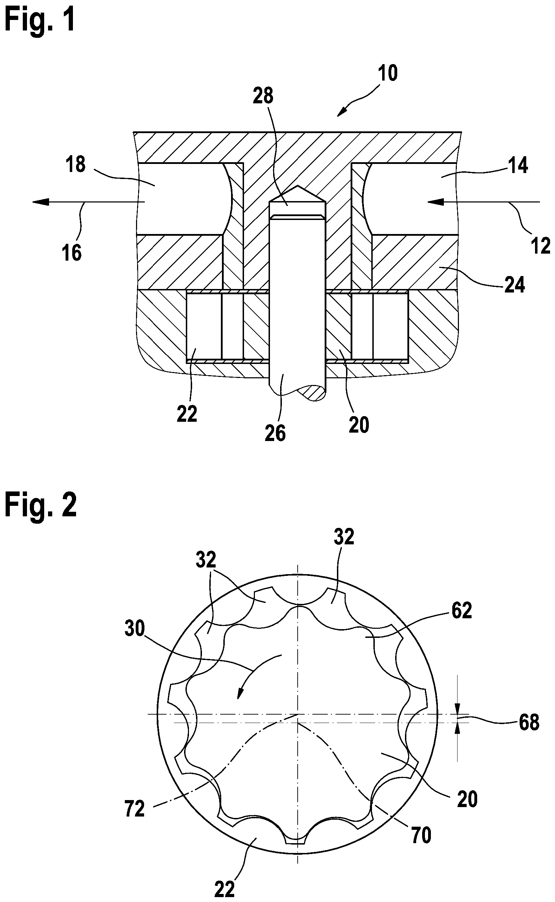

Der Darstellung gemäß Figur 1 ist eine schematische Schnittdarstellung einer Innenzahnradpumpe zu entnehmen.

In Figur 1 ist dargestellt, dass in einem Gehäuse 24 eines als Innenzahnradpumpe ausgebildeten Förderaggregates 10 eine Bohrung 28 ausgebildet ist. In die Bohrung 28 des Gehäuses 24 ragt eine Antriebswelle 26 hinein. Die Antriebswelle 26 kann entweder unmittelbar über einen an einer Verbrennungskraftmaschine vorgesehenen Abtrieb oder auch über einen Nebenantrieb, wie z. B. einen Elektromotor oder dergleichen, angetrieben werden.

Auf der angetriebenen Antriebswelle 26 befindet sich drehfest mit dieser verbunden ein Innenzahnrad 20. Das Innenzahnrad 20 ist in Bezug auf ein dieses umschließendes Außenzahnrad 22 in einer Exzentrizität 68 gelagert (vergleiche Figur 2). Das Gehäuse 24 des Förderaggregates 10 umfasst auf einer Saugseite 12 einen Saugkanal 14 und auf einer Druckseite 16 einen Druckkanal 18. Während das Außenzahnrad 22, welches das Innenzahnrad 20 umschließt, drehbar im Gehäuse 24 des Förderaggregates 10 angeordnet ist, verdreht sich relativ zu diesem das an der Antriebswelle 26 drehfest aufgenommene Innenzahnrad 20.

Der Darstellung gemäß Figur 2 ist eine Wiedergabe der miteinander kämmenden Bauteile Außenzahnrad und Innenzahnrad zu entnehmen.

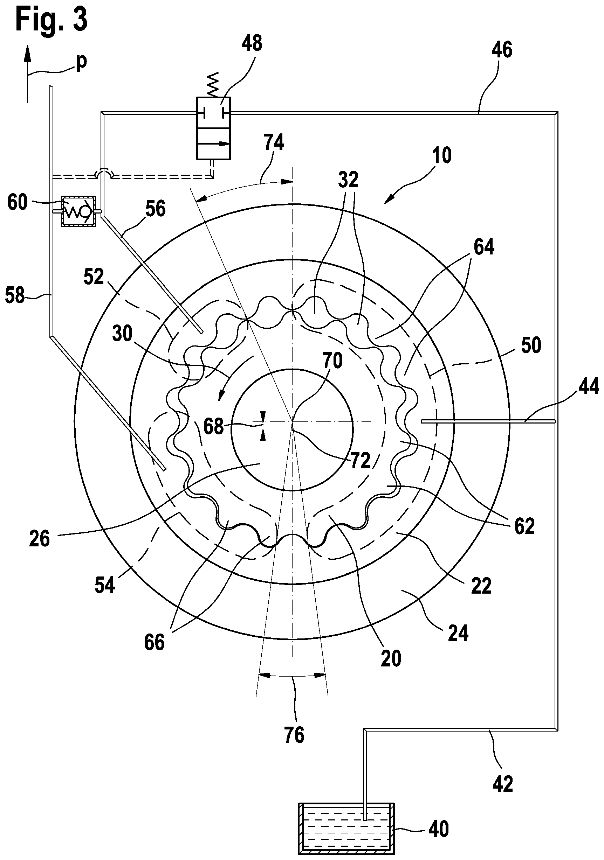

Aus der Ansicht gemäß Figur 2 lässt sich entnehmen, dass das an der in Figur 2 nicht dargestellten Antriebswelle 26 aufgenommene Innenzahnrad 20 mit seiner Achse 70 in der Exzentrizität 86 zur Achse 72 des Außenzahnrades 22 angeordnet ist. Bei der Rotation des Innenzahnrades 20 relativ zum drehbar im Gehäuse 24 des Förderaggregates 10 aufgenommenen Außenzahnrades entstehen die durch Bezugszeichen 32 angedeuteten Förderräume bei Rotation des Innenzahnrades 20 in Drehrichtung 30 entgegen des Uhrzeigersinns. Je nachdem, in welche Richtung die Antriebswelle 26 angetrieben ist, könnte die in Figur 2 dargestellte Drehrichtung 30 auch mit dem Uhrzeigersinn verlaufen. Der Darstellung gemäß Figur 2 ist entnehmbar, dass am Innenzahnrad 20 eine Anzahl von gerundeten Zahnköpfen 62 ausgebildet ist. Diese stellen eine Außenverzahnung 66 dar (vergleiche Darstellung gemäß Figur 3). Die Zahnköpfe 62 des Innenzahnrades 20 kämmen mit einer am Innenumfang des Außenzahnrades 22 korrespondierend ausgebildeten Innenverzahnung.

Der Darstellung gemäß Figur 3 ist eine Ausführungsform des erfindungsgemäß vorgeschlagenen, vereinfacht aufgebauten Förderaggregates zu entnehmen.

Gemäß der in Figur 3 dargestellten Ausführungsform des erfindungsgemäß vorgeschlagen Förderaggregates umfasst dieses vom Gehäuse 24 umschlossen das miteinander kämmende Zahnradpaar, das Innenzahnrad 20 sowie das Außenzahnrad 22 umfassend. Das Innenzahnrad 20 wird über eine in Figur 3 nicht dargestellte Antriebswelle 26 entweder über die Verbrennungskraftmaschine direkt oder mit Hilfe eines Nebenantriebes, wie z. B. eines elektrischen Antriebes, angetrieben. Das Innenzahnrad 20 bewegt sich in Drehrichtung 30 entgegen des Uhrzeigersinns relativ zum drehbar im Gehäuse 24 des Förderaggregates 10 angeordneten Außenzahnrad 22.

Aus einem ein Hydraulikfluid enthaltenden Hydraulikreservoir 40 wird über einen ersten Saugleitungsabschnitt 42 und einen zweiten Saugleitungsabschnitt 44 Hydraulikfluid auf der Saugseite 12 des Förderaggregates 10 angesaugt und über einen dritten Saugleitungsabschnitt 46 einem hydraulischen Schaltventil 48 zugeleitet. Der zweite Saugleitungsabschnitt 44 zweigt vom ersten Saugleitungsabschnitt 42 ab und mündet in einen nierenförmig ausgebildeten Saugkanal 50, wobei sich dieser über etwa 180° entlang der Förderräume 32 erstreckt, die durch die Außenverzahnung 66 des Innenzahnrades 20 und die Innenverzahnung 64 des Außenzahnrades 22 begrenzt werden. Wie im Zusammenhang mit Figur 2 bereits erwähnt, ist das Innenzahnrad 20 in der Exzentrizität 68 in Bezug auf die Achse 72 des Außenzahnrades 22 angeordnet. Über den etwa 180° umschließenden, nierenförmig konfigurierten Saugkanal 50 wird das Förderaggregat 10 mit einem Hydraulikfluid beaufschlagt.

In Drehrichtung 30 - entgegen des Uhrzeigersinns gesehen - ist ein erster Druckkanal 52 vorgesehen. Dieser liegt ebenfalls im Bereich der sich zwischen der Innenverzahnung 64 und der Außenverzahnung 66 ergebenden Förderräume 32 des Förderaggregates 10. Der Beginn des ersten Druckkanals 52 liegt in einem ersten Winkelversatz 74 in Bezug auf das Ende des nierenförmig ausgebildeten, etwa einen 180°-Winkel umschließenden Saugkanales 50.

In Drehrichtung 30 gesehen folgt auf den ersten Druckkanal 52 ein zweiter Druckkanal 54, der sich über etwa 45 bis 60 Winkelgrade in Drehrichtung 30 des Innenzahnrades 20 gesehen erstreckt. Das Ende des zweiten Druckkanales 54 liegt um einen zweiten Winkelversatz 76 vor Beginn des Saugkanales 50. Bei der in Figur 3 dargestellten Ausführungsform liegt der Saugkanal 50 in dem Bereich, in dem sich die Förderräume 32 - in Umfangsrichtung gesehen - vergrößern, und die ersten und zweiten Druckkanäle 52, 54 sind in dem Bereich in Umfangsrichtung gesehen angeordnet, in dem sich die Förderräume 32 aufgrund des mit der Exzentrizität 68 gelagerten Innenzahnrades 20 wieder verkleinern.

Vom ersten Druckkanal 52 zweigt eine erste Druckleitung 56 ab. Von dem zweiten, ebenfalls in Nierenform ausgebildeten Druckkanal 54 zweigt eine zweite Druckleitung 58 ab. Die erste Druckleitung 56 ist von der zweiten Druckleitung 58 durch ein Rückschlagventil 60 getrennt. Hinter dem Rückschlagventil 60 gehen die erste Druckleitung 56 und die zweite Druckleitung 58 ineinander über. Über das in der Ausführungsform gemäß Figur 2 als hydraulisch gesteuertes Schaltventil beschaffene Ventil 48 kann die erste Druckleitung 56, d. h. der erste Druckkanal 52, über den dritten Saugleitungsabschnitt 46 und den zweiten Saugleitungsabschnitt 44 mit dem Hydraulikreservoir 40 kurzgeschlossen werden, wenn dieses z. B. bei einem Druckanstieg von 10 bar oder mehr als 10 bar in die Druckleitung p umschaltet. In diesem Falle ist der erste Druckkanal 52 über das Ventil 48, den dritten Saugleitungsabschnitt 46 und den zweiten Saugleitungsabschnitt 44 mit dem Hydraulikreservoir 40 kurzgeschlossen, so dass das in Figur 3 dargestellte Förderaggregat 10 lediglich über den zweiten nierenförmig konfigurierten Druckkanal 54 in die zweite Druckleitung 48 fördert, so dass der von dem Förderaggregat 10 gelieferte Hydraulikvolumenstrom reduziert wird. In diesem Zustand findet eine Teilförderung von Hydraulikfluid über den zweiten Druckkanal 54 statt, da der erste Druckkanal 52 mit dem Hydraulikreservoir 40 kurzgeschlossen ist und keine Förderung aus diesem erfolgt.

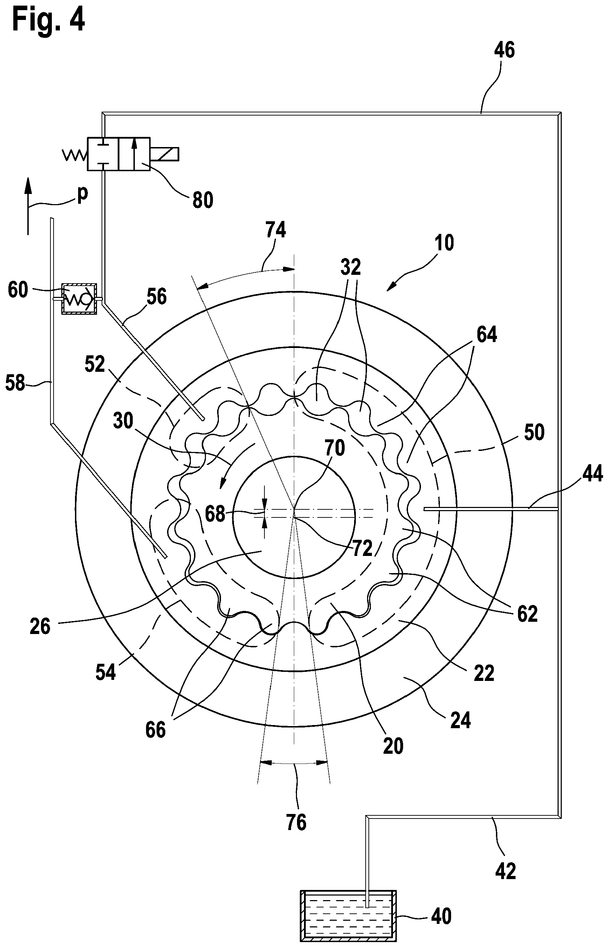

Der Ausführungsform in der Darstellung gemäß Figur 4 ist das erfindungsgemäß vorgeschlagene Förderaggregat 10 zu entnehmen, welches in dieser Ausführungsform über ein als Magnetventil beschaffenes Ventil angesteuert wird.

In Bezug auf die Komponenten des Förderaggregates 10 gemäß der Darstellung in Figur 4 umfasst das Förderaggregat 10 das Gehäuse 24, in welchem das Außenzahnrad 22 drehbar gelagert ist. Das Außenzahnrad 22 umschließt das Innenzahnrad 20. Das die Außenverzahnung 66 aufweisende Innenzahnrad 20 ist in der Exzentrizität 68 in Bezug auf die Achse 72 des drehbaren Außenzahnrades 22 angeordnet. Um die Exzentrizität 68 versetzt liegt die Achse 70 des Innenzahnrades 20 beziehungsweise die Achse der Antriebswelle 26. Aufgrund der Exzentrizität 68 zwischen den Achsen 70 beziehungsweise 72 ergeben sich, bedingt durch die Rotation des Innenzahnrades 20 aufgrund des Antriebes durch die Antriebswelle 26, in Drehrichtung 30 hintereinander liegende Förderräume 32, über welche das Hydraulikfluid von einem Eingangsdruckniveau auf ein Ausgangsdruckniveau komprimiert wird.

Das Hydraulikfluid wird in dem Hydraulikreservoir 40 bevorratet und gelangt über die Saugleitungsabschnitte 42, 44, 46 einerseits zum Magnetventil 80 und andererseits über den zweiten Leitungsabschnitt 44 in die Förderräume 32.

Analog zur in Figur 3 dargestellten Ausführungsform des Förderaggregates 10 erfolgt die Zuleitung des Hydraulikfluides über den nierenförmig ausgebildeten Saugkanal 50 und die Ausleitung des komprimierten Hydraulikfluides über den ersten Druckkanal 52 sowie den zweiten Druckkanal 54. Der erste Druckkanal 52 mündet in die erste Druckleitung 56, die über das Rückschlagventil 30 von der Druckleitung 58, die dem zweiten Druckkanal 54 zugeordnet ist, getrennt ist.

Eine Reduzierung der über das Förderaggregat 10 geförderten Menge von Hydraulikfluid erfolgt dadurch, dass die erste Druckleitung 56 über das Magnetventil 80 mit dem dritten Saugleitungsabschnitt 46 und dem zweiten Saugleitungsabschnitt 44 verbunden wird. Dadurch unterbleibt eine Förderung von Hydraulikfluid über das Rückschlagventil 60 in die zweite Druckleitung 58, so dass ausschließlich komprimiertes Hydraulikfluid über den zweiten Druckkanal 54 in die zweite Druckleitung 58 und von dort in die gemeinsame Druckleitung p gefördert wird.

Das Innenzahnrad 20 gemäß der in Figur 4 dargestellten Ausführungsform umfasst an seinem Außenumfang die Außenverzahnung 66 in Gestalt von Zahnköpfen 62. Die Innenverzahnung 64 ist am Innenumfang des Außenzahnrades 22 analog zur in Figur 3 dargestellten Ausführungsform ausgeführt.

Der Vollständigkeit halber sei erwähnt, dass auch in der Ausführungsform gemäß Figur 4 das Ende des Saugkanales 50 durch den ersten Winkelversatz 74 vom ersten Druckkanal 52 getrennt ist und das Ende des zweiten Druckkanales 54 vom Beginn des nierenförmig konfigurierten Saugkanales 50 durch den zweiten Winkelversatz 76 getrennt ist. Auch in der in Figur 4 dargestellten Ausführungsform des erfindungsgemäß vorgeschlagenen Förderaggregates 10 befindet sich der Druckkanal 50, der im Wesentlichen nierenförmig ausgebildet ist, in dem Bereich, in dem sich die Förderräume 32 - in Umfangsrichtung gesehen - vergrößern, und die ersten und zweiten Druckkanäle 52, 54 in dem Bereich in Umfangsrichtung gesehen, in dem sich die Förderräume 32 aufgrund des mit der Exzentrizität 68 gelagerten Innenzahnrades 20 wieder verkleinern.

Das in der Ausführungsform gemäß Figur 3 dargestellte Ventil 48 kann so ausgelegt sein, dass dieses bei einem definierten Druck selbsttätig schaltet. Dieser definierte Druck kann z.B. in der Größenordnung von 10 bar liegen. Dies bedeutet, dass das Förderaggregat 10 gemäß den Ausführungsformen in den Figuren 2 und 3 bis zu einem erreichten Schaltdruck in der Größenordnung von etwa 10 bar komprimiertes Hydraulikfluid über den ersten Druckkanal 52 und die damit verbundene erste Druckleitung 56 sowie den zweiten Druckkanal 54 und die mit diesem verbundene zweite Druckleitung 58 in die gemeinsame Druckleitung p fördert. Dadurch entsteht ein hoher Volumenstrom, mit dem z. B. eine Kupplung eines zu betätigenden Getriebeautomaten einen Anstellweg durchfährt. Zur Erhöhung beziehungsweise Sicherstellung der Anpresskraft der Kupplung und deren Aufrechterhaltung ist jedoch ein höheres Druckniveau verbunden mit einer geringeren Fördermenge von Hydraulikfluid erforderlich. In diesem Falle erfolgt entweder durch Ansteuern des Magnetventiles 80 oder durch das Öffnen des Ventiles 48 bei einem Druck oberhalb von 10 bar ein Kurzschließen des ersten Druckkanales 52 über die erste Druckleitung 56, das betreffende Ventil 48, 80, den dritten Saugrohrabschnitt 46, den zweiten Saugrohrabschnitt 44 mit der Saugseite des Förderaggregates 10. So lässt sich ein weiterer Druckanstieg mit dem Förderaggregat 10 gemäß den in Figur 2 und 3 dargestellten Ausführungsformen erreichen bei gleichzeitiger Reduzierung der Fördermenge, die durch das erfindungsgemäß vorgeschlagene Förderaggregat 10 gefördert wird.

Aufgrund der geringen Teileanzahl kann durch das erfindungsgemäß vorgeschlagene Förderaggregat eine kompakt bauende und kostengünstig herstellbare Ölpumpe bereitgestellt werden, deren Fördervolumina von der Länge des ersten Druckkanales 52 beziehungsweise des zweiten Druckkanales 54 in Umfangsrichtung der Förderräume 32 gesehen abhängig sind. Je größer beziehungsweise je kleiner die die Druckkanäle 52 beziehungsweise 54 darstellenden, im Wesentlichen nierenförmig konfigurierten Öffnungen gestaltet werden, desto größere beziehungsweise kleinere Volumenströme können über den ersten Druckkanal 52 beziehungsweise den zweiten Druckkanal 54 in die Druckleitungen 56 und 58 beziehungsweise bei Betätigung des Ventiles 48, 80 in die zweite Druckleitung 58 alleine einströmen. Das vorstehend in Bezug auf die Betätigung des Schaltventiles 48 beziehungsweise durch die Betätigung des Magnetventiles 80 erwähnte Schaltdruck kann in der Größenordnung von 10 bar liegen, dies hat sich bei Applikationen des erfindungsgemäß vorgeschlagenen Förderaggregates 10 im Rahmen der Ansteuerung von Kupplungen an Getrieben bewährt, kann jedoch auch applikationsabhängig in einer anderen Größenordnung liegend gewählt werden. Aufgrund der Winkelversätze 74 beziehungsweise 76 ist die Saugseite des erfindungsgemäß vorgeschlagenen Förderaggregates 10, gesehen von der 12-Uhr-Lage über die 3-Uhr-Lage bis etwa zur 6-Uhr-Lage in Umfangsrichtung gesehen, von der Druckseite des erfindungsgemäß vorgeschlagenen Förderaggregates 10, die sich im Wesentlichen von der 6-Uhr-Position über die 9-Uhr-Lage bis zur 12-Uhr-Position erstreckt, getrennt. Durch den ersten Winkelversatz 74 und den zweiten Winkelversatz 76 zwischen dem Saugkanal 52 und den beiden Druckkanälen 52, 54 ist ein Kurzschluss zwischen Saugseite und Druckseite des erfindungsgemäß vorgeschlagenen Förderaggregates 10 ausgeschlossen, so dass der hydraulische Wirkungsgrad des erfindungsgemäß vorgeschlagenen Förderaggregates 10 durch die dargestellte Anordnung des Saugkanales 50 beziehungsweise der Druckkanäle 52, 54 - jeweils in Umfangsrichtung gesehen - nicht beeinträchtigt wird.

## Patentansprüche

1. Hydraulische Schaltung mit einem Förderaggregat (10) zur Förderung eines Hydraulikfluides, insbesondere zur Betätigung von Stellgliedern und/oder zur Begrenzung von Volumenströmen, mit einem Gehäuse (12), wobei das Förderaggregat einen ersten und einen zweiten Druckkanal aufweist, und wobei die hydraulische Schaltung eine erste Druckleitung (56) und eine zweite Druckleitung (58) aufweist und wobei der erste Druckkanal (52) in die erste Druckleitung (56) und der zweite Druckkanal (54) in die zweite Druckleitung (58) mündet, und wobei die hydraulische Schaltung ein Rückschlagventil (60) aufweist durch das die erste Druckleitung (56) von der zweiten Druckleitung (58) getrennt ist und wobei einer der Druckkanäle (52, 54) bei Betätigung eines Schaltventils (48, 80) mit der Saugseite (12, 50) verbunden wird, **dadurch gekennzeichnet, dass** in dem Gehäuse (12) lediglich ein Zahnradpaar aufgenommen ist, in dem also ein Innenzahnrad (20) und ein Außenzahnrad (22) aufgenommen sind, die mindestens einen Förderraum (32) begrenzen, der über einen Saugkanal (12, 50) mit einem Hydraulikfluid beaufschlagt ist, wobei am Förderaggregat (10) druckseitig der erste Druckkanal (52, 56) und der zweite Druckkanal (54, 58) vorgesehen sind und dass es sich bei der Länge des zweiten Druckkanales (54) um eine Länge in Umfangsrichtung handelt, die die Länge des ersten Druckkanals (52) in Umfangsrichtung übersteigt.

2. Hydraulische Schaltung gemäß Anspruch 1, **dadurch gekennzeichnet, dass** das Schaltventil als hydraulisches Ventil (48) oder als Magnetventil (80) ausgeführt ist.

3. Hydraulische Schaltung gemäß Anspruch 1, **dadurch gekennzeichnet, dass** der Saugkanal (50) in dem Bereich verläuft, in dem sich Förderräume (32) in Umfangsrichtung gesehen vergrößern, und der erste und der zweite Druckkanal (52, 54) in Umfangsrichtung gesehen in dem Bereich liegen, in dem sich die Förderräume (32) verkleinern.

4. Hydraulische Schaltung gemäß Anspruch 1, **dadurch gekennzeichnet, dass** sich der erste Druckkanal 52 in einem Umfangswinkelbereich zwischen 30° und 45° erstreckt.

5. Hydraulische Schaltung gemäß Anspruch 1, **dadurch gekennzeichnet, dass** der zweite Druckkanal (54) sich in einem Umfangswinkelbereich zwischen 45° und 90° erstreckt.

6. Hydraulische Schaltung gemäß Anspruch 1, **dadurch gekennzeichnet, dass** bezogen auf die Drehrichtung (30) des Innenzahnrades (20) der erste Druckkanal (52) nach einem ersten Winkelversatz (74) beginnt und der zweite Druckkanal (54) in einem zweiten Winkelversatz (56) vor Beginn des Saugkanales (50) endet.

## Claims

1. Hydraulic circuit having a delivery unit (10) for the delivery of a hydraulic fluid, in particular for the actuation of actuating elements and/or for the limiting of volume flows, said delivery unit having a housing (12), wherein the delivery unit has a first and a second pressure duct, and
wherein the hydraulic circuit has a first pressure line (56) and a second pressure line (58), and wherein the first pressure duct (52) opens out into the first pressure line (56) and the second pressure duct (54) opens out into the second pressure line (58), and wherein the hydraulic circuit has a check valve (60) by way of which the first pressure line (56) is separated from the second pressure line (58), and wherein, upon actuation of a switching valve (48, 80), one of the pressure ducts (52, 54) is connected to the suction side (12, 50), **characterized in that** merely one gearwheel pair is accommodated in the housing (12), an inner gearwheel (20) and an outer gearwheel (22) thus being accommodated therein, said gearwheels delimiting at least one delivery space (32), which is acted on with a hydraulic fluid via a suction duct (12, 50), wherein the first pressure duct (52, 56) and the second pressure duct (54, 58) are provided at the delivery unit (10) on the pressure side, and **in that** the length of the second duct (54) is a length in the circumferential direction, which exceeds the length of the first pressure duct (52) in the circumferential direction.

2. Hydraulic circuit according to Claim 1, **characterized in that** the switching valve is designed in the form of a hydraulic valve (48) or in the form of a solenoid valve (80).

3. Hydraulic circuit according to Claim 1, **characterized in that** the suction duct (50) runs in the region in which, as seen in the circumferential direction, delivery spaces (32) are increased in size and, as seen in the circumferential direction, the first and second pressure ducts (52, 54) are situated in the region in which the delivery spaces (32) are reduced in size.

4. Hydraulic circuit according to Claim 1, **characterized in that** the first pressure duct (52) extends in a circumferential angle range between 30° and 45°.

5. Hydraulic circuit according to Claim 1, **characterized in that** the second pressure duct (54) extends in a circumferential angle range between 45° and 90°.

6. Hydraulic circuit according to Claim 1, **characterized in that**, in relation to the direction of rotation (30) of the inner gearwheel (20), the first pressure duct (52) begins after a first angular offset (74) and the second pressure duct (54) ends at a second angular offset (56) before the beginning of the suction duct (50).

## Revendications

1. Circuit hydraulique comprenant une unité de transport (10) pour transporter un fluide hydraulique, en particulier pour actionner des actionneurs et/ou pour limiter des débits volumiques, comprenant un boîtier (12), l'unité de transport présentant un premier et un deuxième canal de pression, et le circuit hydraulique présentant une première conduite de pression (56) et une deuxième conduite de pression (58) et le premier canal de pression (52) débouchant dans la première conduite de pression (56) et le deuxième canal de pression (54) débouchant dans la deuxième conduite de pression (58), et le circuit hydraulique présentant un clapet antiretour (60) par le biais duquel la première conduite de pression (56) est séparée de la deuxième conduite de pression (58), et l'un des canaux de pression (52, 54), lors de l'actionnement d'une soupape de commutation (48, 80), étant connecté au côté d'aspiration (12, 50), **caractérisé en ce que** seulement une paire de roues dentées est reçue dans le boîtier (12), dans lequel sont donc reçues une roue dentée intérieure (20) et une roue dentée extérieure (22), qui limitent au moins un espace de transport (32) qui est sollicité avec un fluide hydraulique par le biais d'un canal d'aspiration (12, 50), le premier canal de pression (52, 56) et le deuxième canal de pression (54, 58) étant prévus du côté pression au niveau de l'unité de transport (10) et **en ce que** la longueur du deuxième canal de pression (54) est une longueur dans la direction périphérique qui dépasse la longueur du premier canal de pression (52) dans la direction périphérique.

2. Circuit hydraulique selon la revendication 1, **caractérisé en ce que** la soupape de commutation est réalisée sous forme de soupape hydraulique (48) ou sous forme d'électrovanne (80).

3. Circuit hydraulique selon la revendication 1, **caractérisé en ce que** le canal d'aspiration (50) s'étend dans la région dans laquelle les espaces de transport (32) augmentent, vu dans la direction périphérique, et le premier et le deuxième canal de pression (52, 54) sont situés, vu dans la direction périphérique, dans la région dans laquelle les espaces de transport (32) diminuent.

4. Circuit hydraulique selon la revendication 1, **caractérisé en ce que** le premier canal de pression (52) s'étend dans une région angulaire périphérique comprise entre 30° et 45°.

5. Circuit hydraulique selon la revendication 1, **caractérisé en ce que** le deuxième canal de pression (54) s'étend dans une région angulaire périphérique comprise entre 45° et 90°.

6. Circuit hydraulique selon la revendication 1, **caractérisé en ce que**, par rapport au sens de rotation (30) de la roue dentée intérieure (20), le premier canal de pression (52) commence après un premier décalage angulaire (74) et le deuxième canal de pression (54) se termine dans un deuxième décalage angulaire (56) avant le début du canal d'aspiration (50).
